# EUROPEAN PATENT SPECIFICATION

(11) **EP 3 893 295 B1**
(45) Date of publication and mention of the grant of the patent: **13.03.2024**
(21) Application number: 20742002.7
(22) Date of filing: 16.01.2020
(51) Int. Cl.: H01M 4/134, H01M 4/133, H01M 4/36, H01M 4/38, H01M 4/587, H01M 4/62, H01M 10/0525

(54) **NEGATIVE ELECTRODE AND LITHIUM SECONDARY BATTERY INCLUDING SAME**
NEGATIVELEKTRODE UND LITHIUMSEKUNDÄRBATTERIE DAMIT
ÈLECTRODE NÉGATIVE ET BATTERIE SECONDAIRE AU LITHIUM LA COMPRENANT

(30) Priority: 17.01.2019 KR 20190006465
(43) Date of publication of application: 13.10.2021
(60) Divisional application: 24155262.9
(73) Proprietor: LG Energy Solution, Ltd., Seoul 07335 (KR)
(72) Inventor: KIM, Young Jae, Daejeon 34122 (KR); YOO, Jung Woo, Daejeon 34122 (KR)
(74) Representative: Hoffmann Eitle
(86) International application number: PCT/KR2020/000832
(87) International publication number: WO 2020/149682

(56) References cited:
- WO-A1-2013/114094
- CN-A- 108 878 855
- JP-A- 2010 205 430
- JP-A- 2015 053 152
- JP-A- 2015 510 666
- KR-A- 20170 111 746
- KR-A- 20180 007 335
- KR-B1- 101 513 520

## Description

### TECHNICAL FIELD

### Cross-reference to Related Applications

This application claims the benefit of Korean Patent Application No. 10-2019-0006465, filed on January 17, 2019, in the Korean Intellectual Property Office.

### Technical Field

The present invention relates to a negative electrode and a lithium secondary battery including the same, and more particularly, to a negative electrode and a lithium secondary battery including the same, wherein the negative electrode is excellent in conductivity and dispersibility by including three different kinds of conductive materials.

### BACKGROUND ART

As technology development and demand for mobile devices have increased, the demand for secondary batteries as an energy source has been rapidly increased. Among such secondary batteries, lithium secondary batteries having high energy density and voltage, long cycle life, and low self-discharging rate have been commercialized and widely used. In addition, research has been actively conducted on methods for manufacturing high density electrodes with higher energy density per unit volume as an electrode for such a high capacity lithium secondary battery.

In general, a high density electrode is manufactured by going through a process for forming an active material layer by applying a composition in a slurry form including an electrode active material having a size of a few um to tens of um on a substrate, followed by drying and roll-pressing.

More specifically, for example, when manufacturing a negative electrode in an electrode, graphite, a conductive material, and a binder are used as a negative electrode active material to form a negative electrode active material layer. However, according to the demand for high density energy batteries in recent years, studies have been actively conducted on a method for increasing capacity by using a silicon-based compound such as Si/C or SiOx as a negative electrode active material. However, when compared to graphite which is typically used, a silicon-based compound has a large capacity but the volume thereof is rapidly expanded during a charging/discharging process, thereby blocking a conductive path, so that there is a problem in that battery properties are deteriorated.

Accordingly, in order to address a problem occurring when a silicon-based compound is used as a negative electrode active material, a measure for controlling a driving potential, a measure for suppressing the volume expansion itself such as a method of further coating a thin film on an active material layer additionally and a method of controlling the particle diameter of a silicon-based compound, or various measures for preventing a conductive path from being blocked have been discussed. However, the above measures may rather deteriorate the performance of a battery, and thus, the application thereof is limited, so there is still a limitation in commercializing the manufacturing of a negative electrode battery having a high content of a silicon-based compound.

Therefore, there is a need for conducting studies on a conductive material capable of preventing a conductive path from being damaged caused by the volume expansion of the silicon-based compound and a binder capable of minimizing the volume expansion, even when a silicon-based compound is used as an active material to improve capacity performance. WO 2013/114094 A1 describes a composition comprising a first particulate electroactive material and a carbon additives mixture comprising elongate carbon nanostructures and carbon black. CN 108878855 A describes a silicon carbon negative electrode material comprising a silicon carbon negative electrode active material, a conductive agent and a binder, wherein the conductive agent is a conductive carbon black and a single-walled carbon nanotube. KR 1020170111746 A describes an electrode for a Li secondary battery comprising an active material and a conductive material, wherein the conductive material is a mixture of a point conductive material and a linear conductive material, and the conductive material has a surface area of 0.01 to 3.5 m²/g of the active material.

### [Prior Art Document]

### [Patent Document]

(Patent Document 1) Japanese Patent Laid-Open Publication No. 2009-080971

### DISCLOSURE OF THE INVENTION

### TECHNICAL PROBLEM

An aspect of the present invention provides a negative electrode and a lithium secondary battery including the same, the negative electrode including a silicon-based active material, thereby having a high battery capacity and using a conductive material capable of suppressing the expansion of the silicon-based active material during charging/discharging and having excellent dispersibility to prevent a conductive path from being disconnected even when expanded, thereby suppressing the deterioration of performance during the charging/discharging.

### TECHNICAL SOLUTION

According to an aspect of the present invention, there is provided a negative electrode and a lithium secondary battery including the same, the negative electrode including a conductive material for negative electrode, a silicon-based active material, and an aqueous binder, wherein the conductive material for negative electrode includes a first conductive material having a specific surface area of 250 m²/g to 1000 m²/g, a second conductive material having a specific surface area of 55 m²/g to 70 m²/g, and a third conductive material having a specific surface area of 15 m²/g to 20 m²/g, as further defined in the claims.

Meanwhile, the conductive material for negative electrode may include the first conductive material, the second conductive material, and the third conductive material in a weight ratio of (1 to 5):(80 to 120):(30 to 70).

For example, the conductive material for negative electrode may include the first conductive material, the second conductive material, and the third conductive material in a weight ratio of (1 to 3):(95 to 120):(30 to 70).

At this time, the average particle diameter (D₅₀) of the silicon-based active material may be 1 um to 20 µm.

For example, the aqueous binder may include a copolymer including a polyvinyl alcohol-derived unit and an ionized-substituted acrylate-derived unit.

Meanwhile, the polyvinyl alcohol-derived unit may include a unit represented by Formula 1 below, and the ionized-substituted acrylate-derived unit may include a unit represented by Formula 2 below.

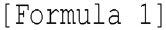

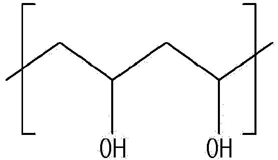

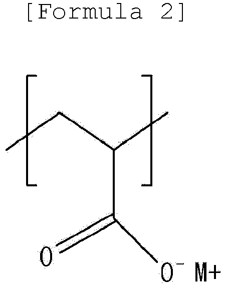

In Formula 2 above, M⁺ is at least one metal cation selected from the group consisting of Na⁺, Li⁺, and K⁺.

At this time, the weight average molecular weight (Mw) of the copolymer may be 100,000 to 500,000.

Meanwhile, the negative electrode may include the silicon-based active material, the conductive material for negative electrode, and the aqueous binder in a weight ratio of (60 to 70) : (10 to 20) : (15 to 25) .

According to another aspect of the present invention, there is provided a lithium secondary battery including a positive electrode, the negative electrode, and an electrolyte.

### ADVANTAGEOUS EFFECTS

A negative electrode according to the present invention is capable of providing high capacity by using a silicon-based active material and capable of improving lifespan properties by suppressing the silicon-based active material from being expanded during charging/discharging, and even when expanded, providing a conductive path which is not disconnected due to the expansion by using a conductive material having high dispersibility.

### MODE FOR CARRYING OUT THE INVENTION

Hereinafter, the present invention will be described in more detail to facilitate understanding of the present invention.

It will be understood that words or terms used in the specification and claims shall not be interpreted as having the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present invention. The terms of a singular form may include plural forms unless the context clearly indicates otherwise.

In the present specification, it should be understood that the terms "include," "comprise," or "have" are intended to specify the presence of stated features, numbers, steps, elements, or combinations thereof, but do not preclude the presence or addition of one or more other features, numbers, steps, elements, or combinations thereof.

In the present specification, "specific surface area" is measured by a BET method, and specifically, is calculated from the adsorption amount of nitrogen gas under a liquid nitrogen temperature (77K) using Belsorp-mino II of BEL Japan Co.

In the present specification, "average particle diameter Dₙ" refers to a diameter at an n% point in the cumulative distribution of the number of particles according to particle diameter. That is, D₅₀ is the particle size at 50% point in the cumulative distribution of the number of particles according to particle diameter, and D₉₀ is the particle size at 90% point of the cumulative distribution of the number of particles according to particle diameter, and D₁₀ is the particle size at 10% point of the cumulative distribution of the number of particles according to particle diameter. Meanwhile, the average particle diameter may be measured by a laser diffraction method. Specifically, powder to be measured is dispersed in a dispersion medium, and then introduced into a commercially available laser diffraction particle size measurement device (for example, Microtrac S3500) to calculate particle size distribution by measuring diffraction pattern difference according to particle size when particles are passed through a laser beam.

In the present specification, "weight average molecular weight (Mw)" may refer to a conversion value for reference polystyrene, the value measured by gel permeation chromatography (GPC), and unless otherwise specified, molecular weight may refer to the weight average molecular weight. For example, in the present invention, the weight average molecular weight is measured using Agilent's 1200 series under GPC conditions, and a column used at this time may be Agilent's PL mixed B column and a solvent may be THF.

### Negative electrode

A negative electrode according to the present invention includes a conductive material for negative electrode, a silicon-based active material, and an aqueous binder.

Meanwhile, the negative electrode may further include a negative electrode current collector, and the negative electrode current collector typically has a thickness of 3 um to 500 um. The negative electrode current collector is not particularly limited as long as it has high conductivity without causing a chemical change in the battery. For example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, microscopic irregularities may be formed on the surface of the negative electrode current collector to improve the coupling force of a negative electrode active material, and the negative electrode current collector may be used in various forms of such as a film, a sheet, a foil, a net, a porous body, a foam body, and a non-woven fabric body.

First, a conductive material for negative electrode will be described. The conductive material for negative electrode according to the present invention includes three different types of conductive materials, and more specifically, includes a first conductive material having a specific surface area of 250 m²/g to 1000 m²/g, a second conductive material having a specific surface area of 55 m²/g to 70 m²/g, and a third conductive material having a specific surface area of 15 m²/g to 20 m²/g.

Typically, a graphite-based compound has been generally used alone as a negative electrode active material. However, in recent years, as high capacity batteries are in high demand, there is an increasing attempt to mix and use a silicon-based compound in order to increase capacity. However, a silicon-based compound has a limitation in that the volume thereof is rapidly expanded during a charging/discharging process, thereby damaging a conductive path formed in a negative electrode active material layer, and thus, rather deteriorates the performance of a battery.

Therefore, the present invention devised a measure in which three conductive materials having different specific surface areas from each other are used as a conductive material for negative electrode forming a conductive path. When three different kinds of conductive materials having different specific surface areas are used together, a conductive material may be present on the surfaces of silicon-based active material particles, between the silicon-based active material particles, and between aggregates when the silicon-based active material particles are aggregated, so that the conductive material may be distributed at high dispersibility in a negative electrode. Meanwhile, even when the silicone-based active material is expanded, the conductive material may be constantly present on the surfaces of the particles, between the particles, and between the particle aggregates, so that a conductive path formed by the conductive material is not affected by volume expansion, resulting in maintaining excellent performance of the battery.

The first conductive material has a specific surface area of 250 m²/g to 1000 m²/g, preferably 400 m²/g to 1000 m²/g, more preferably 450 m²/g to 1000 m²/g. When the specific surface area of the first conductive material is within the above range, the first conductive material is uniformly dispersed on the surfaces of silicon-based active material particles and between the particles, so that a conductive path may be stably formed.

In terms of connecting silicon-based active material particles to each other, the first conductive material is at least one of a multi-walled carbon nanotube or a single-walled carbon nanotube, and more preferably, the first conductive material may be a single-walled carbon nanotube.

The second conductive material has a specific surface area of 55 m²/g to 70 m²/g, preferably 57.5 m²/g to 70 m²/g, more preferably 60 m²/g to 70 m²/g. When the specific surface area of the second conductive material is within the above range, the second conductive material is uniformly dispersed between silicon-based active material particles, so that it is possible to prevent a conductive material from being disconnected even when a silicon-based active material is expanded during charging/discharging.

The type of the second conductive material having the specific surface area is not limited. For example, carbon black and the like may be used.

The third conductive material has a specific surface area of 15 m²/g to 20 m²/g, preferably 15.5 m²/g to 20 m²/g, more preferably 16 m²/g to 20 m²/g. When the specific surface area of the third conductive material is within the above range, the third conductive material maintains the state of being stably adhered to an aggregate formed by the second conductive material and a binder, so that a conductive path may be prevented from being disconnected.

For example, the type of the third conductive material having the specific surface area is not limited. For example, carbon nano fiber (CNF), a graphite-based conductive material, plate-shaped graphite flakes, and the like may be used.

Meanwhile, the conductive material for negative electrode may include the first conductive material, the second conductive material, and the third conductive material in a weight ratio of (1 to 5):(80 to 120): (30 to 70), preferably in a weight ratio of (1 to 3):(95 to 120): (30 to 70) .

When the first conductive material to the third conductive material are present within the above content range, dispersibility is excellent while phase stability is high. Meanwhile, when the surface of the active material particles or the active material particles are attached to each other, or when gaps generated the particles or the active material particles are separated from each other, the first to third conductive materials may be present in a predetermined amount or more in a section connecting the particles, thereby stably forming a conductive path. In particular, the volume of a silicon-based active material is greatly expanded during initial charging/discharging. However, even after the expansion, damage to the conductive path may be minimized by the third conductive material having a size similar to that of the silicon-based active material. Meanwhile, the first and second conductive materials may also be present within gaps between the third conductive material and a silicon-based active material, thereby increasing contact points between the conductive material and the silicon-based active material, so that it is possible to minimize a conductive path from being short-circuited.

Next, a silicon-based active material will be described.

The negative electrode according to the present invention uses pure silicon (Si) as a silicon-based active material. Since the capacity of a silicon-based active material is significantly higher than that of a graphite-based active material which is typically used, so that there have been more attempts to apply the same. However, the volume expansion rate of the silicon-based active material during charging/discharging is high, so that only a trace amount thereof is mixed and used with a graphite-based active material.

Therefore, in the present invention, while using only a silicon-based active material is used as a negative electrode active material to improve capacity performance, three kinds of conductive materials having different specific surface areas from each other were mixed and used in order to address the above problem.

Meanwhile, the silicon-based active material of the present invention is not limited to have a specific particle, crystal size or specific surface area, and may be used in various ways depending on the purpose of the usage thereof. However, the average particle diameter (D₅₀) of the silicon-based active material may be, for example, 1 um to 20 um, preferably 1 um to 15 um, more preferably 1 um to 10 um. When the average particle diameter (D₅₀) of the silicon-based active material is within the above range, while maintaining excellent dispersibility, it is possible to prevent the silicon-based active material from settling in the negative electrode, so that processability may be prevented from being deteriorated.

Next, the aqueous binder will be described.

In general, the type of binder which may be used varies depending on the type of negative electrode active material used. As the graphite-based active material which is typically used, carboxymethyl cellulose (CMC) or styrene-butadiene rubber-based binder (SBR), which is relatively weak in strength but has high adhesive force, is used.

The graphite-based active material which has been typically used does not rapidly expand during a charge/discharge process, so that a compound having a high adhesive force may be used as a binder. However, when a silicon-based active material is used and a typical binder is used, since the volume of the silicon-based active material is rapidly expanded during charging/discharging, if the strength of the binder is weak, a conductive path is disconnected due to the expansion, so that battery performance is bound to be deteriorated.

Therefore, in the case of the present invention in which a silicon-based active material is used, in order to prevent the disconnection of a conductive path due to volume expansion during charging and discharging in advance, one copolymer having high strength while having excellent adhesive force is used as a single aqueous binder.

For example, the aqueous binder includes a copolymer including a polyvinyl alcohol-derived unit and an ionized-substituted acrylate-derived unit.

Specifically, although the copolymer is a single aqueous binder, it is possible to secure phase stability and adhesive force, so that a manufacturing process may be simplified. In addition, it is possible to suppress the disconnection of the conductive path due to the volume expansion of the silicon-based active material, prevent the deformation of the negative electrode despite the volume change of the negative electrode with excellent adhesive force, and secure excellent charge/discharge lifespan properties.

In particular, the copolymer has an ionized-substituted acrylate-derived unit, the adhesive force may be remarkably improved than when an ionized-unsubstituted acrylate-derived unit is included.

In particular, when using a silicon-based active material and when using carboxymethyl cellulose (CMC) and styrene butadiene rubber (SBR), which are commonly used binders, the silicon-based active material is excessively expanded during charging and discharging, so that CMC or SBR that was adsorbed on the silicon-based active material is not broken but stretched, and is not restored.

Accordingly, there is a problem in that it is difficult to maintain a conductive path or a network between silicon-based active materials. On the other hand, when the copolymer is used as an aqueous binder, during the expansion of silicon particles, a portion of the copolymer is broken but a minimal amount of remaining copolymer which may serve as sufficient resistance to the volume expansion is present by being in the state of being adsorbed on the silicon particles, so that the volume expansion of the silicon-based active material is suppressed. Accordingly, a conductive path or a network between silicon-based active materials may be maintained. Therefore, the lifespan properties of the battery may be improved.

The ionized-substituted acrylate-derived unit may be formed by a process in which alkyl acrylate is copolymerized with a monomer and added with an excessive amount of an aqueous solution of ions to perform substitution. In this case, the ionized-substituted acrylate-derived unit in the structure of a final copolymer may be understood as an ionized-substituted acrylate-derived unit based on an ionized-substituted final polymer irrespective of acrylate (for example, alkyl acrylate) used as a raw material.

An ionized-unsubstituted acrylate-derived unit includes a hydroxy group (-OH). When the ionized-unsubstituted acrylate-derived unit is included in the copolymer in a large amount, for example, in 2 mol% or more, after a negative electrode slurry is dried, the crystallization proceeds to a high level by hydrogen bonding force, so that the copolymer is too easily broken. Accordingly, the amount of 'unbroken copolymer' which may suppress the volume expansion of silicon particles is significantly reduced, and copolymers adsorbed on the silicon particles are reduced. Accordingly, the adhesive force between a negative electrode active material layer and the current collector is lowered, and the lifespan properties of a battery are deteriorated.

However, a copolymer used in the present invention do not include an ionized-unsubstituted acrylate-derived unit, or include the same in a content as low as less than 2 mol%. At this time, due to metal cations substituting hydrogen, the degree of graphitization of the copolymer is lowered to an appropriate level. Therefore, even if some copolymers are broken during the volume expansion of silicon particles, remaining copolymers are adsorbed on the silicon particles without being broken, so that the adhesive force between a negative electrode active material layer and a current collector may be improved, and the lifespan properties of a battery may be improved.

The mole fraction may be measured as follows. First, the copolymer is subjected to GC/MS analysis using EQC-0107 (Pyrolyzer (PY-2020)/Agilent6890N GC/5973N MSD)) in a powder state to determine a correct functional group. Thereafter, solid NMR (Agilent 600 MHz NMR) or solution NMR (Bruker 600 MHz NMR) is performed, and the content ratio for each composition is confirmed from the peak integration value of the measured graph.

In the copolymer, the polyvinyl alcohol-derived unit may include a unit of Formula 1 below.

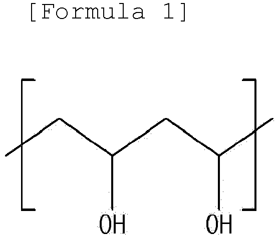

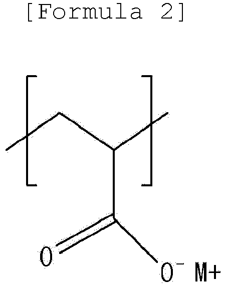

Furthermore, the copolymer may include 2000 to 3000 units of Formula 1 above and 1000 to 2000 units of Formula 2 above.

The copolymer may be a block copolymer formed by including a polyvinyl alcohol-derived unit and an ionized-substituted acrylate-derived unit. That is, the copolymer may have a structure in which a polyvinyl alcohol-derived unit and an ionized-substituted acrylate-derived unit are linearly connected and may have a structure constituting a main chain.

The polyvinyl alcohol-derived unit and the ionized substituted acrylate-based unit means a structure formed by an addition reaction of polyvinyl alcohol and acrylate units having a double bond, and in the case of acrylate, a substituent group bonded to ester in the structure of a final copolymer and a substituent group in a raw material are not necessarily identical.

More preferably, the ionized-substituted acrylate may be at least one or more selected from the group consisting of sodium acrylate and lithium acrylate, and most preferably, may be sodium acrylate.

The sodium acrylate and the lithium acrylate may be formed by a process in which alkyl acrylate is copolymerized with a monomer and added with an excessive amount of sodium ions or a lithium ion aqueous solution to perform substitution. At this time, in the structure of a final copolymer, an acrylate-derived unit may be understood as a sodium acrylate-derived unit or a lithium acrylate-derived unit irrespective of acrylate (for example, alkyl acrylate) used as a raw material.

The copolymer may include a polyvinyl alcohol-derived unit and an ionized-substituted acrylate-derived unit in a weight ratio of 6:4 to 8:2. When the polyvinyl alcohol-derived unit and the ionized-substituted acrylate-derived unit are included in the above weight ratio range, the copolymer is adsorbed to the silicon-based active material due to polyvinyl alcohol having a hydrophilic group and maintains proper dispersibility, and the adsorbed polymer forms a film after being dried and expresses stable adhesive force.

When the polyvinyl alcohol is included in less than the above weight ratio range, the hydrophilic properties thereof are weakened and the solid content which may be dissolved in water is reduced, so that a phenomenon in which a binder floats on the surface of an electrode becomes prominent, affecting performance and although adsorption on the surface of a negative electrode active material which is hydrophobic is possible, dispersion may be problematic. When the polyvinyl alcohol is included in more than the above weight ratio range, due to the inherent properties of polyvinyl alcohol, a lot of bubbles are generated during dissolution or mixing, so that silicon-based active materials are adsorbed on the bubbles and aggregated, causing the generation of macromolecule silicon-based active materials which are not dispersed. As a result, inferior battery performance may be indicated and various problems may occur.

Meanwhile, the copolymer may have a weight average molecular weight of 100,000 to 500,000. When the weight average molecular weight of the copolymer is less than 100,000, the dispersion force between the copolymers is weakened, thereby increasing the possibility of aggregation between aqueous binders and it may be difficult to improve charge/discharge lifespan properties. When greater than 500,000, since it is difficult to dissolve the copolymer at a high concentration, the copolymer is not suitable for increasing the solid content of a negative electrode slurry, and gelation is likely to occur during polymerization.

Meanwhile, the negative electrode according to the present invention may include the silicon-based active material, the conductive material for negative electrode, and the aqueous binder in a weight ratio of (60 to 70):(10 to 20) : (15 to 25), preferably (60 to 70) : (10 to 20) : (18 to 22). When the components are included in the above weight ratio, while having high capacity, the volume expansion of the silicon-based active material may be minimized, and the conductive material and the silicon-based active material are uniformly dispersed, so that a conductive path may be stably formed.

Next, when forming the negative electrode, a solvent may be further used to control viscosity and the like. At this time, the solvent may be water and the like, and may be used in an amount to achieve proper viscosity since the solvent may be uniformly coated on the negative electrode current collector when the conductive material for negative electrode, the silicon-based active material, the aqueous binder, and the like are included. For example, the solvent may be included in an amount such that the concentration of a solid including the conductive material for negative electrode, the silicon-based active material, and the aqueous binder is 10 wt% to 40 wt%, preferably 15 wt% to 40 wt%, more preferably 20 wt% to 40 wt%.

### Lithium secondary battery

A lithium secondary battery according to the present invention will be described. The lithium secondary battery includes a positive electrode, the negative electrode, and an electrolyte, and may further include a separator which may be selectively interposed depending on the type of the electrolyte and the like. Hereinafter, each component will be described. At this time, the negative electrode is the same as described above, a detailed description thereof will be omitted.

The positive electrode may be manufactured by coating a composition for forming a positive electrode including a positive electrode active material, a binder for positive electrode, a conductive material for positive electrode, a solvent, and the like on a positive electrode current collector.

The positive electrode current collector is not particularly limited as long as it has conductivity without causing a chemical change in the battery. For example, stainless steel, aluminum, nickel, titanium, fired carbon, or aluminum or stainless steel that is surface-treated with one of carbon, nickel, titanium, silver, and the like may be used. Also, as in the case of the negative electrode current collector, microscopic irregularities may be formed on the surface of the positive electrode current collector to improve the coupling force of a positive electrode active material, and the positive electrode current collector may be used in various forms of such as a film, a sheet, a foil, a net, a porous body, a foam body, and a non-woven fabric body.

The positive electrode active material is a compound capable of reversible intercalation and de-intercalation of lithium, and specifically, may include a lithium composite metal oxide containing one or more metals such as cobalt, manganese, nickel or aluminum, and lithium. More specifically, the lithium composite metal oxide may be a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y1}Mn_{Y1}O₂ (wherein 0<Y1<1), LiMn_{2-z1}Ni_{z1}O₄ (wherein 0<Z1<2), etc.), a lithium-nickel-cobalt-based oxide (e.g., LiNi_{1-Y2}Co_{Y2}O₂ (wherein 0<Y2<1), etc.), a lithium-manganese-cobalt-based oxide (e.g., LiCo_{1-Y3}Mn_{Y3}O₂ (wherein 0<Y3<1), LiMn_{2-z2}Co_{z2}O₄ (wherein 0<Z2<2), etc.), a lithium-nickel-manganese-cobalt-based oxide (e.g., Li(Niₚ₁Co_{q1}Mnᵣ₁)O₂ (wherein 0<p1<1, 0<q1<1, 0<r1<1, p1+q1+r1=1) or Li(Niₚ₂Co_{q2}Mnᵣ₂)O₄ (wherein 0<p2<2, 0<q2<2, 0 < r2<2, p2+q2+r2=2), etc.), or a lithium-nickel-cobalt-transition metal (M) oxide (e.g., Li(Niₚ₃Co_{q3}Mnᵣ₃M₋ₛ₁)O₂ (wherein M is selected from the group consisting of Al, Fe, V, Cr, Ti, Ta, Mg, and Mo, and p3, q3, r3, and s1 are each an atomic fraction of independent elements, wherein 0<p3<1, 0< q3<1, 0<r3<1, 0<s1<1, p3+q3+r3+s1=1) and the like, and any one thereof or a compound of two or more thereof may be included.

Among these, due to the fact that the capacity properties and stability of a battery may be increased, the lithium composite metal oxide may be LiCoO₂, LiMnO₂, LiNiO₂, a lithium nickel-manganese-cobalt oxide (e.g., Li(Ni_{0.6}Mn_{0.2}Co_{0.2})O₂, Li(Ni_{0.5}Mn_{0.3}Co_{0.2})O₂, or Li(Ni_{0.8}Mn_{0.1}Co_{0.1})O₂, etc.), or a lithium nickel cobalt aluminum oxide (e.g., LiNi_{0.8}Co_{0.15}Al_{0.05}O₂, etc.), and the like. When considering an remarkable improvement effect according to the control of type and content ratio of constituent elements forming a lithium composite metal oxide, the lithium composite metal oxide may be Li (Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and the like, and any one thereof or a mixture of two or more thereof may be used.

The binder for positive electrode is a component for assisting in coupling between a positive electrode active material and an electrode conductive material, and coupling to a current collector. For example, the same type of binder as the aqueous binder may be used, or depending on the type of positive electrode active material to be used, polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene (PE), polypropylene, an ethylene-propylene-diene monomer (EPDM), a sulfonated EPDM, styrene-butadiene rubber, fluorine rubber, various copolymers, and the like may be used.

The conductive material for positive electrode is a component for further improving the conductivity of a positive electrode active material. The conductive material for positive electrode is not particularly limited as long as it has conductivity without causing a chemical change in the battery. The above conductive material for positive electrode may be used. Alternatively, graphite; a carbon-based material such as carbon black nanotubes, acetylene black, Ketjen black, channel black, furnace black, lamp black, and thermal black; a conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; or a polyphenylene derivative may be used. Specific examples of a commercially available conductive material may include acetylene black series (products of Chevron Chemical Company), Denka black (product of Denka Singapore Private Limited, Gulf Oil Company, etc.,), Ketjen black, EC series (product of Armak Company), Vulcan XC-72 (product of Cabot Company), and Super P (product of Timcal company).

The solvent may include an organic solvent such as N-methyl-2-pyrrolidone (NMP), and may be used in an amount such that a preferred viscosity is achieved when the positive electrode active material, and selectively, a binder for positive electrode and a conductive material for positive electrode, and the like are included.

The electrolyte includes a lithium salt and an organic solvent, and may further include an additive and the like selectively.

The lithium salt is used to improve the yield of lithium ions (Li⁺ transference number) and the dissociation of lithium ions by providing sufficient lithium ions.

Specifically, any compound may be used as a lithium salt without any particular limitation as long as it is a compound which may provide lithium ions used in a lithium secondary battery. Specifically, the lithium salt includes Li⁺ as a cation, and may use one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (F₂SO₂)2N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻, and (CF₃CF₂SO₂)₂N⁻, or, if necessary, a mixture of two or more thereof as an anion.

Any organic solvent may be used as the organic solvent without particular limitation as long as it is typically used in an electrolyte for lithium secondary battery. For example, an ether compound, an ester compound, an amide compound, a linear carbonate compound, or a cyclic carbonate compound may be used alone or in combination of two or more thereof.

Specific examples of the cyclic carbonate compound may include any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC), or a mixture of two or more thereof. Also, specific examples of the linear carbonate compound may include any one selected from the group consisting of dimethyl carbonate (DMC), diethyl carbonate (DEC), dipropyl carbonate, ethyl methyl carbonate (EMC), methyl propyl carbonate, and ethyl propyl carbonate, or a mixture of two or more thereof, but are not limited thereto.

Also the ether compound may be any one selected from the group consisting of dimethyl ether, diethyl ether, dipropyl ether, methyl ethyl ether, methyl propyl ether, and ethyl propyl ether, or a mixture of two or more thereof, but is not limited thereto.

Also, the ester compound may be any one selected from the group consisting linear esters such as methyl acetate, ethyl acetate, propyl acetate, methyl propionate, ethyl propionate, propyl propionate, and butyl propionate; and cyclic esters such as γ-butyrolactone, γ-valerolactone, γ-caprolactone, σ-valerolactone, and ε-caprolactone, or a mixture of two or more thereof, but is not limited thereto.

Meanwhile, the electrolyte for a lithium secondary battery according to the present invention may further include an additive. Specific examples of the additive may include one or more compounds selected from the group consisting of vinylene carbonate (VC), propanesultone (PS), polyphenylene sulfide, succinitrile (SN), propenesultone (PRS), vinyl ethylene carbonate, lithium difluoro (oxalato) borate (LiODFB), ethylene sulfate, adiponitrile, and lithium bis (oxalato) borate. When the compounds listed above are used together as an additive, a film may be stably formed simultaneously on a positive electrode and a negative electrode. At this time, by the film formed on the negative electrode, the electrolyte is suppressed from being decomposed under high-temperature and high pressure conditions, and by the film formed on the positive electrode, a transition metal included in the positive electrode is suppressed from being eluted, so that the high-temperature and high-pressure properties and stability of the battery may be improved.

As the separator, a porous polymer film which has been typically used as a separator, for example, a porous polymer film prepared with a polyolefin-based polymer, such as an ethylene homopolymer, a propylene homopolymer, an ethylene-butene copolymer, an ethylene-hexene copolymer, and an ethylene-methacrylate copolymer may be used alone, or in a laminated form thereof. Alternatively, a typical porous non-woven fabric, for example, a non-woven fabric formed of a glass fiber having a high melting point or polyethylene terephthalate fiber may be used, but the present invention is not limited thereto.

### [Examples]

### 1: Example 1

### (1) Manufacturing negative electrode

15 parts by weight of a conductive material for negative electrode; in which a single-walled carbon nanotube (SWCNT) having a specific surface area of 520 m²/g as a first conductive material, carbon black having a specific surface area of 63 m²/g as a second conductive material, plate-shaped graphite having a specific surface area of 17 m²/g as a third conductive material were mixed at a weight ratio of 0.3:9.7:5, 65 parts by weight of Si (average particle (D₅₀) : 2.5 um) as a silicon-based active material, 20 parts by weight of a polyvinyl alcohol- sodium ionized substituted poly acrylic acid (PVA-PAA (Na⁺)) copolymer (weight average molecular weight: 360,000) as a binder were mixed and then added with water such that the solid content was 25 wt% to prepare a composition for forming a negative electrode. Thereafter, the composition for forming a negative electrode was applied on a negative electrode current collector (Cu thin film) having a thickness of 15 um by loading to a level of 68-71 mg/25cm², followed by drying and roll-pressing to manufacture a negative electrode having a void ratio of 28-32%.

### (2) Manufacturing of half-cell

A porous polyolefin separator was interposed between Li metal as a counter electrode and the negative electrode manufactured above, and then injected with an electrolyte prepared by dissolving lithium hexafluorophosphate (LiPF₆) having a concentration of 1.0% in an organic solvent in which ethylene carbonate, dimethyl carbonate and ethyl methyl carbonate were mixed at a volume ratio of s 3:4:3 to manufacture a half-cell.

### 2. Example 2

A lithium secondary battery was manufactured in the same manner as in Example 1 except that a multi-walled carbon nanotube (MWCNT) having a specific surface area of 270 m²/g instead of a single-walled carbon nanotube (SWCNT) having a specific surface area of 520 m²/g was used as a first conductive material to prepare a composition for forming a negative electrode.

### 3. Example 3

A lithium secondary battery was manufactured in the same manner as in Example 1 except that the first conductive material, the second conductive material, and the third conductive material were mixed at a weight ratio of 0.2:9.7:5 to prepare a conductive material for negative electrode.

### 4. Example 4

A lithium secondary battery was manufactured in the same manner as in Example 1 except that the first conductive material, the second conductive material, and the third conductive material were mixed at a weight ratio of 0.5:9.7:5 to prepare a conductive material for negative electrode.

### 5. Example 5

A lithium secondary battery was manufactured in the same manner as in Example 1 except that carbon black having a specific surface area of 45 m²/g instead of carbon black having a specific surface area of 63 m²/g was used as a second conductive material to prepare a composition for forming a negative electrode.

### 6. Example 6

A lithium secondary battery was manufactured in the same manner as in Example 1 except that the first conductive material, the second conductive material, and the third conductive material were mixed at a weight ratio of 0.3:10.7:4 to prepare a conductive material for negative electrode.

### 7. Example 7

A lithium secondary battery was manufactured in the same manner as in Example 1 except that the first conductive material, the second conductive material, and the third conductive material were mixed at a weight ratio of 0.3:8.7:6 to prepare a conductive material for negative electrode.

### 8. Example 8

A lithium secondary battery was manufactured in the same manner as in Example 1 except that plate-shaped graphite having a specific surface area of 13 m²/g instead of plate-shaped graphite having a specific surface area of 17 m²/g was used as a third conductive material to prepare a composition for forming a negative electrode.

### 9. Example 9

A lithium secondary battery was manufactured in the same manner as in Example 1 except that the first conductive material, the second conductive material, and the third conductive material were mixed at a weight ratio of 0.3:11.2:3.5 to prepare a conductive material for negative electrode.

### [Comparative Examples]

### 1. Comparative Example 1

A lithium secondary battery was manufactured in the same manner as in Example 1 except that only the carbon black (second conductive material) having a specific surface area of 63 m²/g was used as a conductive material for negative electrode.

### 2. Comparative Example 2

A lithium secondary battery was manufactured in the same manner as in Example 1 except that a conductive material for negative electrode in which a single-walled carbon nanotube (SWCNT) having a specific surface area of 520 m²/g as a first conductive material and plate-shaped graphite having a specific surface area of 17 m²/g as a third conductive material were mixed at a weight ratio of 0.3:14.7 was used.

### 3. Comparative Example 3

A lithium secondary battery was manufactured in the same manner as in Example 1 except that a conductive material for negative electrode in which a single-walled carbon nanotube (SWCNT) having a specific surface area of 520 m²/g as a first conductive material and carbon black having a specific surface area of 63 m²/g as a second conductive material were mixed at a weight ratio of 0.7:14.3 was used.

### 4. Comparative Example 4

A lithium secondary battery was manufactured in the same manner as in Example 1 except that a conductive material for negative electrode in which carbon black having a specific surface area of 63 m²/g as a second conductive material and plate-shaped graphite having a specific surface area of 17 m²/g as a third conductive material were mixed at a weight ratio of 5:10 was used.

### [Experimental Examples]

### 1. Experimental Example 1: Evaluation of lifespan properties

The lithium secondary battery manufactured in each of Examples and Comparative Examples was activated, and then 2 cycles of charge/discharge were performed thereon wherein 1 cycle of charge/discharge is performed under the condition of 0.1 C charge (0.05 current cut)/0.1 C discharge (1.5 V cut). At this time, discharge capacity after only 1 cycle is performed is defined as an initial capacity.

Thereafter, 48 cycles of charge/discharge were performed wherein one cycle of charge/discharge is performed under the condition of 0.5 C charge (0.05 C current cut)/0.5 C discharge (1.5 V cut).

Finally, discharge capacity after the 48 cycles was measured, and capacity retention rate with respect to the initial capacity was calculated. The results are shown in Table 1 below.

**[Table 1]**

| | Capacity retention rate (%) |
|---|---|
| Example 1 | 67.1 |
| Example 2 | 53.8 |
| Example 3 | 63.1 |
| Example 4 | 42.5 |
| Example 5 | 44.3 |
| Example 6 | 59.0 |
| Example 7 | 54.6 |
| Example 8 | 49.8 |
| Example 9 | 61.5 |
| Comparative Example 1 | 42.0 |
| Comparative Example 2 | 35.7 |
| Comparative Example 3 | 32.4 |
| Comparative Example 4 | 37.5 |

Referring to Table 1 above, components in negative electrodes manufactured according to Examples rather than Comparative examples are uniformly dispersed, so that it can be seen that capacity retention rate was significantly high.

## Claims

1. A negative electrode comprising:
a conductive material for negative electrode;
a silicon-based active material; and
an aqueous binder,
wherein the conductive material for negative electrode includes a first conductive material having a specific surface area of 250 m²/g to 1000 m²/g, a second conductive material having a specific surface area of 55 m²/g to 70 m²/g, and a third conductive material having a specific surface area of 15 m²/g to 20 m²/g,
wherein the specific surface area is measured by a BET method, and
wherein the first conductive material is at least one of a multi-walled carbon nanotube or a single-walled carbon nanotube.

2. The negative electrode of claim 1, wherein the conductive material comprises the first conductive material, the second conductive material, and the third conductive material in a weight ratio of (1 to 5) : (80 to 120) : (30 to 70) .

3. The negative electrode of claim 2, wherein the conductive material comprises the first conductive material, the second conductive material, and the third conductive material in a weight ratio of (1 to 3) : (95 to 120) : (30 to 70) .

4. The negative electrode of claim 1, wherein the specific surface area of the first conductive material is 400 m²/g to 1000 m²/g, and wherein the specific surface area is measured by a BET method.

5. The negative electrode of claim 1, wherein the average particle diameter (D₅₀) of the silicon-based active material is 1 um to 20 µm.

6. The negative electrode of claim 1, wherein the aqueous binder comprises a copolymer including a polyvinyl alcohol-derived unit and an ionized-substituted acrylate-derived unit.

7. The negative electrode of claim 6, wherein the polyvinyl alcohol-derived unit comprises a unit represented by Formula 1 below, and the ionized-substituted acrylate-derived unit comprises a unit represented by Formula 2 below: 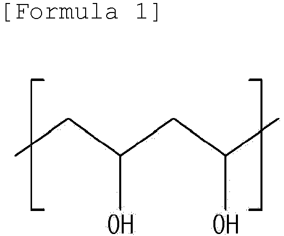 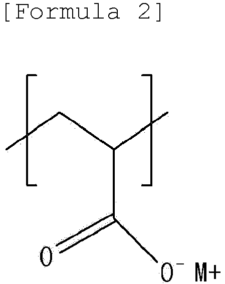 wherein, in Formula 2 , M⁺ is at least one metal cation selected from the group consisting of Na⁺, Li⁺, and K⁺.

8. The negative electrode of claim 6, wherein a weight average molecular weight (Mw) of the copolymer is 100,000 to 500,000.

9. The negative electrode of claim 1, wherein the silicon-based active material, the conductive material, and the aqueous binder are included in a weight ratio of (60 to 70) : (10 to 20) : (15 to 25).

10. A lithium secondary battery comprising a positive electrode, the negative electrode according to claim 1, and an electrolyte.

## Patentansprüche

1. Negative Elektrode, umfassend:
ein leitfähiges Material für eine negative Elektrode;
ein Aktivmaterial auf Siliciumbasis; und
ein wässriges Bindemittel,
worin das leitfähige Material für eine negative Elektrode ein erstes leitfähiges Material mit einer spezifischen Oberfläche von 250 m²/g bis 1000 m²/g, ein zweites leitfähiges Material mit einer spezifischen Oberfläche von 55 m²/g bis 70 m²/g und ein drittes leitfähiges Material mit einer spezifischen Oberfläche von 15 m²/g bis 20 m²/g enthält,
worin die spezifische Oberfläche mit einer BET-Methode gemessen wird, und
worin das erste leitfähige Material mindestens eines von einer mehrwandigen Kohlenstoffnanoröhre oder einer einwandigen Kohlenstoffnanoröhre ist.

2. Negative Elektrode gemäß Anspruch 1, worin das leitfähige Material das erste leitfähige Material, das zweite leitfähige Material und das dritte leitfähige Material in einem Gewichtsverhältnis von (1 bis 5) : (80 bis 120) : (30 bis 70) umfasst.

3. Negative Elektrode gemäß Anspruch 2, worin das leitfähige Material das erste leitfähige Material, das zweite leitfähige Material und das dritte leitfähige Material in einem Gewichtsverhältnis von (1 bis 3) : (95 bis 120) : (30 bis 70) umfasst.

4. Negative Elektrode gemäß Anspruch 1, worin die spezifische Oberfläche des ersten leitfähigen Materials 400 m²/g bis 1000 m²/g beträgt und worin die spezifische Oberfläche mit einer BET-Methode gemessen wird.

5. Negative Elektrode gemäß Anspruch 1, worin der durchschnittliche Teilchendurchmesser (D₅₀) des Aktivmaterials auf Siliciumbasis 1 µm bis 20 µm beträgt.

6. Negative Elektrode gemäß Anspruch 1, worin das wässrige Bindemittel ein Copolymer umfasst, dass eine von Polyvinylalkohol abgeleitete Einheit und eine von ionisiertem substituiertem Acrylat abgeleitete Einheit enthält.

7. Negative Elektrode gemäß Anspruch 6, worin die von Polyvinylalkohol abgeleitete Einheit eine durch nachstehende Formel 1 dargestellte Einheit umfasst und die von ionisiertem substituiertem Acrylat abgeleitete Einheit eine durch nachstehende Formel 2 dargestellte Einheit umfasst: 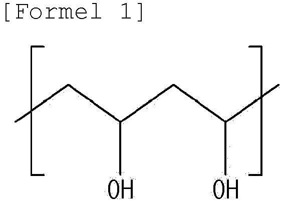 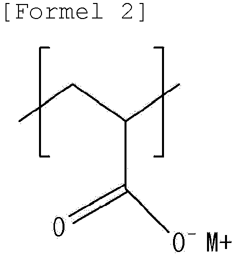 worin, in Formel 2 , M⁺ mindestens ein Metallkation ist, ausgewählt aus der Gruppe, bestehend aus Na⁺, Li⁺ und K⁺.

8. Negative Elektrode gemäß Anspruch 6, worin ein gewichtsmittleres Molekulargewicht (Mw) des Copolymers 100.000 bis 500.000 beträgt.

9. Negative Elektrode gemäß Anspruch 1, worin das Aktivmaterial auf Siliciumbasis, das leitfähige Material und das wässrige Bindemittel in einem Gewichtsverhältnis von (60 bis 70) : (10 bis 20) : (15 bis 25) enthalten sind.

10. Lithiumsekundärbatterie, umfassend eine positive Elektrode, die negative Elektrode gemäß Anspruch 1 und einen Elektrolyten.

## Revendications

1. Électrode négative comprenant :
un matériau conducteur pour électrode négative ;
un matériau actif à base de silicium ; et
un liant aqueux,
dans laquelle le matériau conducteur pour électrode négative inclut un premier matériau conducteur présentant une surface spécifique de 250 m²/g à 1000 m²/g, un deuxième matériau conducteur présentant une surface spécifique de 55 m²/g à 70 m²/g, et un troisième matériau conducteur présentant une surface spécifique de 15 m²/g à 20 m²/g,
dans laquelle la surface spécifique est mesurée par un procédé BET, et
dans laquelle le premier matériau conducteur est au moins l'un parmi un nanotube de carbone multiparoi ou un nanotube de carbone monoparoi.

2. Électrode négative selon la revendication 1, dans laquelle le matériau conducteur comprend le premier matériau conducteur, le deuxième matériau conducteur et le troisième matériau conducteur à un rapport pondéral de (1 à 5) : (80 à 120) : (30 à 70).

3. Électrode négative selon la revendication 2, dans laquelle le matériau conducteur comprend le premier matériau conducteur, le deuxième matériau conducteur et le troisième matériau conducteur à un rapport pondéral de (1 à 3) : (95 à 120) : (30 à 70).

4. Électrode négative selon la revendication 1, dans laquelle la surface spécifique du premier matériau conducteur est de 400 m²/g à 1000 m²/g, et dans laquelle la surface spécifique est mesurée par un procédé BET.

5. Électrode négative selon la revendication 1, dans laquelle le diamètre moyen de particule (D₅₀) du matériau actif à base de silicium est de 1 µm à 20 µm.

6. Électrode négative selon la revendication 1, dans laquelle le liant aqueux comprend un copolymère incluant un motif dérivé d'un polyalcool vinylique et un motif dérivé d'un acrylate ionisé-substitué.

7. Électrode négative selon la revendication 6, dans laquelle le motif dérivé d'un polyalcool vinylique comprend un motif représenté par la formule 1 ci-dessous, et le motif dérivé d'un acrylate ionisé-substitué comprend un motif représenté par la formule 2 ci-dessous : 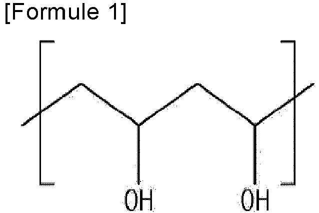 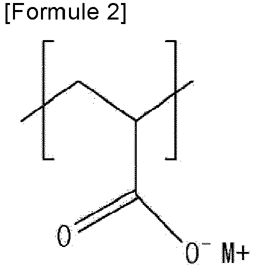 dans laquelle, dans la formule 2, M⁺ est au moins un cation de métal sélectionné dans le groupe composé de Na⁺, Li⁺, et K⁺.

8. Électrode négative selon la revendication 6, dans laquelle un poids moléculaire moyen en poids (Mw) du copolymère est de 100 000 à 500 000.

9. Électrode négative selon la revendication 1, dans laquelle le matériau actif à base de silicium, le matériau conducteur et le liant aqueux sont inclus à un rapport pondéral de (60 à 70) : (10 à 20) : (15 à 25).

10. Batterie secondaire au lithium comprenant une électrode positive, l'électrode négative selon la revendication 1, et un électrolyte.
